# EUROPEAN PATENT APPLICATION

(11) **EP 3 978 207 A1**
(43) Date of publication of application: **06.04.2022**
(21) Application number: 21824278.2
(22) Date of filing: 07.07.2021
(51) Int. Cl.: B25J 11/00, B25J 19/00

(54) **ROBOT AND HOUSING THEREOF**

(30) Priority: 08.07.2020 CN 202010652761
(71) Applicant: CloudMinds Robotics Co., Ltd., Shanghai 201111 (CN)
(72) Inventor: ZHANG, Yufeng, Shanghai 201111 (CN)
(74) Representative: Renaudo, Adrien Hanouar
(86) International application number: PCT/CN2021/105078
(87) International publication number: WO 2022/007865

(57) **Abstract**

The present disclosure relates to a robot and a housing thereof. The housing includes a forearm shell (3), an upper arm shell (4) and a chest shell. At least one of the forearm shell (3), the upper arm shell (4) and the chest shell is a flexible shell. The flexible shell includes an elastic main body layer (1). According to the above technical solution, the robot housing provided by the present disclosure may reduce and even avoid limitations of the housing to motion ranges of joints of the robot, and also ensures attractive appearance.

## Description

### FIELD

The present disclosure relates to the technical field of robots, and particularly to a robot and a housing thereof.

### BACKGROUND

A body of a robot consists of an internal bracket and a housing. The housing wraps the internal bracket and is used to protect an internal structure of the robot and decorate the robot at the same time.

An existing robot housing is usually made of plastics, a metal, or other hard materials. Such a housing made of a hard material is highly hard and nonelastic, and thus may restrict motions of joints of a robot and further limit motion ranges of the joints of the robot. Moreover, the joints of the robot may form friction with the housing in motion processes to seriously abrade portions of the housing at the joints.

However, in order to meet requirements of the motion ranges of the joints of the robot and avoid interferences of the housing to the motions of the joints, such a housing made of a hard material needs to be arranged away from the joints of the robot to ensure relatively wide motion ranges of the joints of the robot. In such case, the housing may not cover the whole internal bracket. Consequently, the internal structure or cables of the robot are exposed, and the whole robot is not so attractive in appearance.

### SUMMARY

An objective of the present disclosure is to provide a robot housing, which may reduce and even avoid limitations of the housing to motion ranges of joints of a robot and also ensures attractive appearance.

Another objective of the present disclosure is to provide a robot, which has relatively wide motion ranges of joints and is also attractive in appearance.

In order to achieve the above objectives, the present disclosure provides a robot housing, which includes a forearm shell, an upper arm shell and a chest shell. At least one of the forearm shell, the upper arm shell and the chest shell is a flexible shell. The flexible shell includes an elastic main body layer.

Optionally, the flexible shell includes an elastic fabric layer. The elastic fabric layer wraps a whole outer surface of the main body layer.

Optionally, the elastic fabric layer is hydrophobic, and/or oleophobic, and/or fireproof and/or abrasion-proof.

Optionally, the main body layer is made of a foam material.

Optionally, the foam material is ethyl vinyl acetate (EVA) foam. Hardness of the EVA foam is 50 HB to 70 HB.

Optionally, the housing includes an elbow joint shell made of a plastic material. The elbow joint shell is located between the forearm shell and the upper arm shell, and includes an elbow joint cover portion configured to cover an elbow joint actuator and an elbow joint cover fixing portion connected with the elbow joint cover portion. The elbow joint cover fixing portion is connected to the forearm shell. The upper arm shell is a flexible shell. An upper end portion of the upper arm shell is fixed to an upper end portion of an upper arm skeleton of a robot. A lower end portion of the upper arm shell is freely suspended and extends to an elbow joint.

Optionally, the upper arm shell is structured into a sleeve-shaped structure capable of sleeving the upper arm skeleton of the robot. The upper end portion of the upper arm shell may be connected to the upper end portion of the upper arm skeleton in a tensioned state through a first positioning and connecting structure. The housing includes a shoulder joint shell made of a plastic material. The shoulder joint shell includes a shoulder joint cover portion configured to cover a shoulder joint actuator and a shoulder joint cover fixing portion connected with the shoulder joint cover portion. The shoulder joint cover fixing portion covers the upper end portion of the upper arm shell in a surrounding and pressing manner.

Optionally, the first positioning and connecting structure includes a first columnar bump formed at the upper end portion of the upper arm skeleton and a first through hole formed in the upper end portion of the upper arm shell. The first columnar bump may be matched with the first through hole.

Optionally, the shoulder joint cover fixing portion includes a first shoulder joint cover fixing portion and a second shoulder joint cover fixing portion, both of which are structured into half rings. The first shoulder joint cover fixing portion and the second shoulder joint cover fixing portion are butted into a ring structure through a first buckle structure.

Optionally, the housing includes a wrist joint shell made of a plastic material. The wrist joint shell is located on a lower side of the forearm shell, and includes a wrist joint cover portion configured to cover a wrist joint actuator. A palm of a robot is connected with the wrist joint actuator. The forearm shell is a flexible shell. An upper end portion of the forearm shell is fixed to an upper end portion of a forearm skeleton of the robot. A lower end portion of the forearm shell is freely suspended and extends to a wrist joint.

Optionally, the forearm shell is structured into a sleeve-shaped structure capable of sleeving the forearm skeleton of the robot. The upper end portion of the forearm shell may be connected to the upper end portion of the forearm skeleton in a tensioned state through a second positioning and connecting structure. The housing includes an elbow joint shell made of a plastic material. The elbow joint shell includes an elbow joint cover portion configured to cover an elbow joint actuator and an elbow joint cover fixing portion connected with the elbow joint cover portion. The elbow joint cover fixing portion covers the upper end portion of the forearm shell in a surrounding and pressing manner.

Optionally, the second positioning and connecting structure includes a second columnar bump formed at the upper end portion of the forearm skeleton and a second through hole formed in the upper end portion of the forearm shell. The second columnar bump may be matched with the second through hole.

Optionally, the elbow joint cover fixing portion includes a first elbow joint cover fixing portion and second elbow joint cover fixing portion, both of which are structured into half rings. The first elbow joint cover fixing portion and the second elbow joint cover fixing portion are butted into a ring structure through a second buckle structure.

Optionally, the housing includes a cuirass shell made of a plastic material. The chest shell is a flexible shell, and includes a waist portion located at a lower end portion thereof, a chest side portion located on a side of a chest of a robot and a shoulder portion extending from the chest side portion to shoulder. A shoulder opening through which a shoulder joint mechanism penetrates is formed in the shoulder portion. The cuirass shell covers a forebreast and back of the robot. An inner edge of the chest shell close to the cuirass shell is fixed to a chest skeleton of the robot. A side, where the shoulder opening is formed, of the shoulder portion is freely suspended and extends to a shoulder joint. And/or, a lower end portion of the waist portion away from the cuirass shell is freely suspended and extends to a waist joint.

Optionally, the inner edge of the chest shell is covered by an outer edge of the cuirass shell. The chest shell and the cuirass shell are fixed to the chest skeleton through fasteners.

Optionally, an inner edge of each of the waist portion, the chest side portion and the shoulder portion is fixed to the chest skeleton of the robot.

Optionally, the cuirass shell includes a forebreast cuirass shell and a back cuirass shell. An upper end portion of the forebreast cuirass shell is clamped with an upper end portion of the back cuirass shell. The forebreast cuirass shell and the back cuirass shell define together a neck opening through which a neck joint mechanism penetrates. A meshed front stiffener is arranged on an inner lateral surface of the forebreast cuirass shell. And/or, a meshed rear stiffener is arranged on an inner lateral surface of the upper end portion of the back cuirass shell.

Based on the above-mentioned technical solution, the present disclosure also provides a robot, which includes the above-mentioned robot housing.

According to the above technical solutions, at least one of the forearm shell, upper arm shell and chest shell in the robot housing provided in the present disclosure may be a flexible shell. The main body layer in the flexible layer may be elastically deformed under the action of an external force and recovered when the external force is removed. When a joint of the robot moves to a joint shell of the robot to interfere with the flexible shell, the flexible shell is elastically deformed by an acting force of the joint shell of the robot. In such case, the joint of the robot may keep moving. Therefore, the flexible shell may reduce and even avoid limitations to motion ranges of joints of the robot. In addition, an internal skeleton of the robot may be completely covered without avoiding the joints of the robot, so that the robot is more attractive in appearance, and internal components of the robot may be protected and prevented from being contaminated by external dirt. Moreover, the flexible shell is shaped and includes the elastic main body layer, and thus may not be damaged or abraded by interferences. Therefore, the service life of the housing may be ensured, and various actions of the robot may be completed under the condition of implementing various Industrial Designs (IDs) of the robot.

Other features and advantages of the present disclosure will be subsequently described in detail in Detailed Description of the Invention.

### BRIEF DESCRIPTION OF THE DRAWINGS

The drawings, which constitute a part of the specification, are used to provide further understandings of the present disclosure and explain, together with the following specific implementation modes, the present disclosure and not intended to form limits to the present disclosure. In the drawings:
FIG. 1 is a schematic diagram when a housing is mounted to a robot according to an embodiment of the present disclosure;
FIG. 2 is an exploded three-dimensional structural schematic diagram of a housing according to an embodiment of the present disclosure;
FIG. 3 is an exploded three-dimensional structural schematic diagram of a housing according to an embodiment of the present disclosure, which shows a forearm shell, an upper arm shell, a shoulder joint shell and an elbow joint shell;
FIG. 4 is a partial structural schematic diagram of a portion of a housing at a shoulder joint of a robot according to an embodiment of the present disclosure;
FIG. 5 is a partial sectional view of a portion of a housing at a shoulder joint of a robot according to an embodiment of the present disclosure;
FIG. 6 is a partial sectional view of a portion of a housing at an elbow joint of a robot according to an embodiment of the present disclosure;
FIG. 7 is a structural schematic diagram of a cuirass shell and chest shell in a housing according to an embodiment of the present disclosure;
FIG. 8 is a three-dimensional structural schematic diagram of a forebreast cuirass shell in a housing according to an embodiment of the present disclosure;
FIG. 9 is a three-dimensional structural schematic diagram of a back cuirass shell in a housing according to an embodiment of the present disclosure;
FIG. 10 is a schematic sectional view of a forearm shell and upper arm shell in a housing according to an embodiment of the present disclosure, which shows the deformation of the upper arm shell by a force;
FIG. 11 is a schematic sectional view of a forearm shell in a housing according to an embodiment of the present disclosure, which shows the deformation of the forearm shell by a force; and
FIG. 12 is a schematic sectional view of a flexible shell in a housing according to an embodiment of the present disclosure, which shows a main body layer.

### DESCRIPTIONS ABOUT THE REFERENCE SIGNS

1-main body layer; 2-elastic fabric layer; 3-forearm shell; 31-second through hole; 4-upper arm shell; 41-first through hole; 5-forebreast cuirass shell; 51-front stiffener; 6-back cuirass shell; 61-rear stiffener; 71-first shell; 72-second shell; 73-shoulder joint cover portion; 74-first shoulder joint cover fixing portion; 75-second shoulder joint cover fixing portion; 81 -third shell; 82-fourth shell; 83-elbow joint cover portion; 84-first elbow joint cover fixing portion; 85-second elbow joint cover fixing portion; 91-waist portion; 92-chest side portion; 93-shoulder portion; 94-shoulder opening; 10-neck opening; 101-first columnar bump; 102-second columnar bump; and 103-palm of the robot.

### DETAILED DESCRIPTION OF EXAMPLE EMBODIMENTS

Specific implementation modes of the present disclosure will be described below in combination with the drawings in detail. It should be understood that the specific implementation modes described herein are only used to describe and explain the present disclosure and not intended to limit the present disclosure.

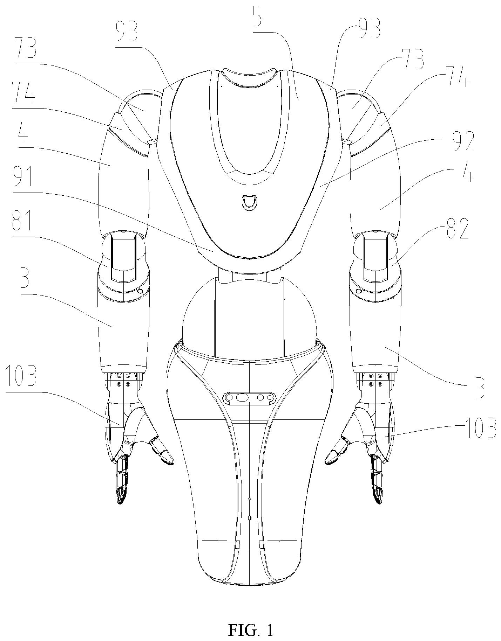

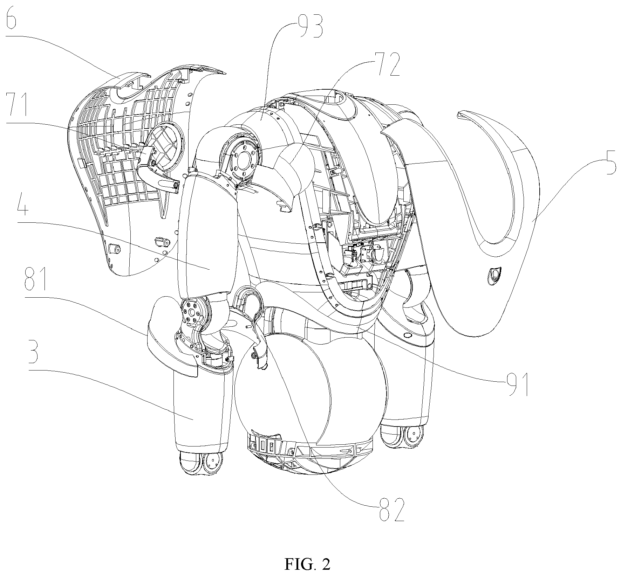

Direction terms used in the present disclosure such as "upper, lower, front and rear" are defined based on the robot, unless specified oppositely. The direction of the head of the robot is an upper direction, and the opposite direction is a lower direction. Directions "upper and lower" correspond to the upper direction and lower direction in the drawings in FIGs. 1 to 3. The direction that the robot faces is a front direction, and the opposite direction is a rear direction. Directions "front and rear" correspond to the right direction and left direction in the drawing in FIG. 2. In addition, "inner and outer" refer to "inner and outer" relative to a contour of a corresponding component. Moreover, terms "first", "second", "third", "fourth" and the like used in the present disclosure are for distinguishing one element from another element and do not represent a sequence and importance. Furthermore, when the drawings are involved in the following descriptions, the same reference signs in different drawings represent the same or similar elements, unless otherwise explained. The above definitions are only for explaining and describing the present disclosure and should not be understood as limits to the present disclosure.

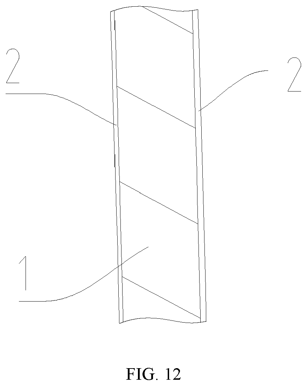

According to a specific implementation mode of the present disclosure, referring to FIGs. 1 to 12, a robot housing is provided, which includes s forearm shell 3, an upper arm shell 4 and a chest shell. At least one of the forearm shell 3, the upper arm shell 4 and the chest shell is a flexible shell. The flexible shell includes an elastic main body layer 1.

According to the above technical solution, at least one of the forearm shell 3, upper arm shell 4 and chest shell in the robot housing provided in the present disclosure may be a flexible shell. The main body layer 1 in the flexible layer may be elastically deformed under the action of an external force and recovered when the external force is removed. When a joint of a robot moves to a joint shell of the robot to interfere with the flexible shell, the flexible shell is elastically deformed by an acting force of the joint shell of the robot. In such case, the joint of the robot may keep moving. Therefore, the flexible shell may reduce and even avoid limitations to motion ranges of joints of the robot. In addition, an internal skeleton of the robot may be completely covered without avoiding the joints of the robot, so that the robot is more attractive in appearance, and internal components of the robot may be protected and prevented from being contaminated by external dirt. Moreover, the flexible shell is shaped and includes the elastic main body layer 1, and thus may not be damaged or abraded by interferences. Therefore, the service life of the housing may be ensured, and various actions of the robot may be completed under the condition of implementing various IDs of the robot.

In the specific implementation mode provided in the present disclosure, in order to further ensure attractive appearance, the flexible shell may include an elastic fabric layer 2. The elastic fabric layer 2 may be designed into various colors or patterns as practically needed, and wraps a whole outer surface of the main body layer 1 such that the flexible shell is more attractive in appearance. In addition, the elastic fabric layer 2 is elastic and thus may be favorable for the elastic deformation of the main body layer 1. When a joint shell of a robot interferes with the flexible shell, the elastic fabric layer 2 is elastically deformed together with the main body layer 1. In addition, the elastic fabric layer 2 may have different properties such as hydrophobicity, oleophobicity and fireproof performance according to a practical application environment, to protect the main body layer 1 as well as internal components of the robot. Of course, the elastic fabric layer 2 may also have all of the above-mentioned properties. No specific limits are made thereto in the present disclosure. After the elastic fabric layer 2 is contaminated, a new elastic fabric layer 2 may be used instead, and the main body layer 1 may continue to be used, so that the material cost of the robot housing is reduced to a great extent. Moreover, the elastic fabric layer 2 may also be abrasion-proof, so that the abrasion of the flexible shell caused by interferences may be reduced, and the service life of the flexible shell is further prolonged.

In the specific implementation mode provided in the present disclosure, the main body layer 1 may be made of any suitable elastic material that may be produced by a mold. Optionally, the main body layer 1 may be made of a foam material. The foam material has high air permeability and thus may timely dissipate heat produced when internal components of the robot work to ensure the performance and efficiency of the internal components of the robot and prolong the service life of the internal components of the robot. In addition, the main body layer 1 may also be made of a material such as silica gel, rubber and foam. No specific limits are made thereto in the present disclosure. The foam material may be EVA foam. Hardness of the EVA foam may be 50 HB to 70 HB. The EVA foam needs not only to ensure that the flexible shell may be elastically deformed after interferences but also to ensure that the flexible shell is recovered and kept in an original shape under the condition that an external force is removed. Preferably, the hardness of the EVA foam is 60 HB.

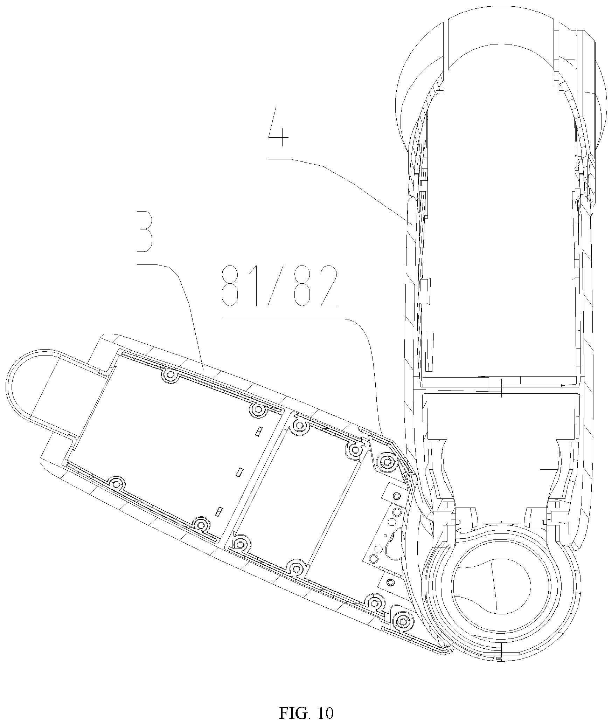

In the specific implementation mode provided in the present disclosure, the upper arm shell 4 may be a flexible shell. In the embodiment, the housing includes an elbow joint shell made of a plastic material. The elbow joint shell is located between the forearm shell 3 and the upper arm shell 4, and includes an elbow joint cover portion 83 configured to cover an elbow joint actuator and an elbow joint cover fixing portion connected with the elbow joint cover portion 83. The elbow joint cover fixing portion is connected to the forearm shell 3. The upper arm shell 4 is a flexible shell. An upper end portion of the upper arm shell 4 is fixed to an upper end portion of an upper arm skeleton of a robot. A lower end portion of the upper arm shell 4 is freely suspended and extends to an elbow joint. When the elbow joint actuator drives a forearm of the robot to move to the lower end portion of the upper arm shell 4 and interfere with the elbow joint cover fixing portion, the lower end portion of the upper arm shell 4 is stressed to be elastically deformed, as shown in FIG. 10. In such case, the forearm of the robot may be driven by the elbow joint actuator to keep moving, and the lower end portion of the upper arm shell 4 may not be damaged or abraded by interferences of the elbow joint shell, so that the upper arm shell 4 may reduce and even avoid limitations to a motion range of the elbow joint of the robot. Therefore, the upper arm shell 4 needs not to be arranged away from the elbow joint of the robot, and the lower end portion of the upper arm shell 4 may cover the elbow joint of the robot to solve the problem of lack of aesthetics caused by the exposure of components and cables at the elbow joint of the robot and further protect the components and cables at the elbow joint of the robot.

The upper arm shell 4 may be structured in any appropriate manner. Optionally, the upper arm shell 4 may be structured into a sleeve-shaped structure capable of sleeving the upper arm skeleton of the robot. The upper end portion of the upper arm shell 4 may be connected to the upper end portion of the upper arm skeleton in a tensioned state through a first positioning and connecting structure. Through the first positioning and connecting structure, a mounting position of the upper arm shell 4 may be found rapidly and accurately, and the accuracy of the mounting position of the upper arm shell 4 is ensured. Moreover, the upper end portion of the upper arm shell 4 is connected to the upper end portion of the upper arm skeleton, and the lower end portion of the upper arm shell 4 extends to the elbow joint. Such a setting ensures that the upper arm shell 4 may completely cover the upper arm skeleton, thereby ensuring the attractive appearance of the robot.

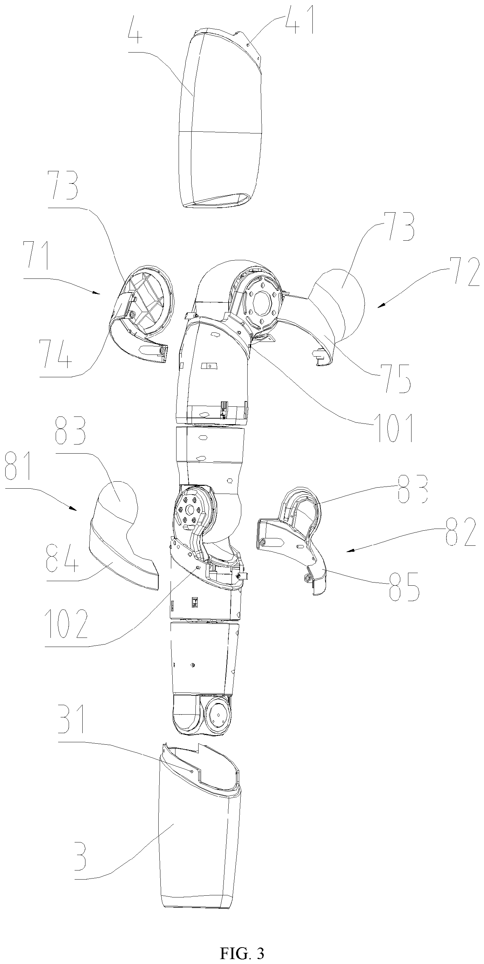

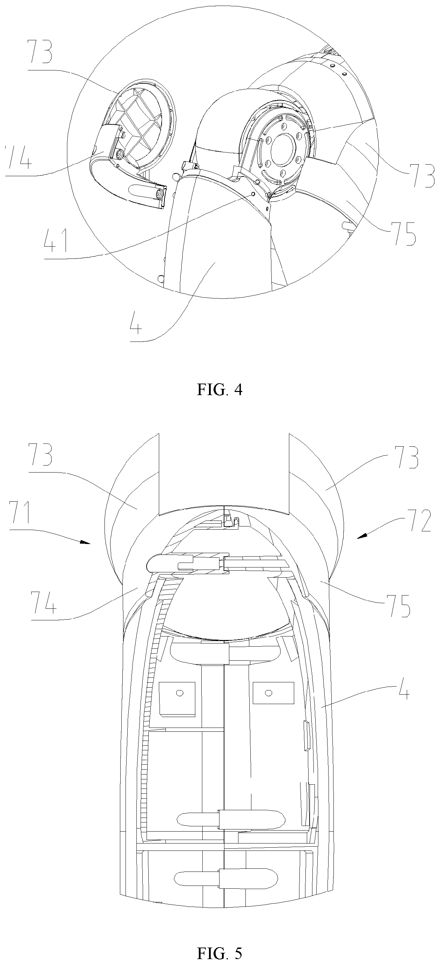

The first positioning and connecting structure may be structured in any appropriate manner. Optionally, as shown in FIGs. 3 and 4, the first positioning and connecting structure may include a first columnar bump 101 formed at the upper end portion of the upper arm skeleton and a first through hole 41 formed in the upper end portion of the upper arm shell 4. The first columnar bump 101 may be matched with the first through hole 41. The first columnar bump 101 is matched with the first through hole 41, so that the mounting position of the upper arm shell 4 is accurate, and the upper arm shell 4 and the upper arm skeleton may be assembled conveniently.

In order to ensure the connecting reliability between the upper arm shell 4 and the upper arm skeleton, a fastening connecting piece may be arranged at the upper end portion of the upper arm shell 4. The upper arm shell 4 is firmly mounted to the upper arm skeleton through the fastening connecting piece. The fastening connecting piece may be a bolt, a screw, etc. Multiple bots or screws may be circumferentially spaced around the upper end portion of the upper arm shell 4 to fasten the upper arm shell 4 to the upper arm skeleton. In the specific embodiment provided in the present disclosure, the upper arm shell 4 may be fastened to the upper arm skeleton through a shoulder joint shell made of a plastic material (e.g., plastics and other plastic materials). The shoulder joint shell includes a first shell 71 and a second shell 72. Each of the first shell 71 and the second shell 72 includes a shoulder joint cover portion 73 configured to cover a shoulder joint actuator and a shoulder joint cover fixing portion connected with the shoulder joint cover portion 73. The shoulder joint cover fixing portion covers the upper end portion of the upper arm shell 4 in a surrounding and pressing manner. The upper end portion of the upper arm shell 4 is tightly pressed on the upper arm skeleton through the shoulder joint cover fixing portion to avoid the upper arm shell 4 being separated from the upper arm skeleton, thereby ensuring the connecting reliability of the upper arm shell 4 and the upper arm skeleton.

The shoulder joint cover fixing portion may be structured in any appropriate manner. Optionally, referring to FIGs. 2 to 4, the shoulder joint cover fixing portion includes a first shoulder joint cover fixing portion 74 and a second shoulder joint cover fixing portion 75, both of which are structured into half rings. The first shoulder joint cover fixing portion 74 is formed on the first shell 71. The second shoulder joint cover fixing portion 75 is formed on the second shell 72. The first shoulder joint cover fixing portion 74 and the second shoulder joint cover fixing portion 75 are butted into a ring structure through a first buckle structure. The first shoulder joint cover fixing portion 74 and the second shoulder joint cover fixing portion 75 circumferentially surround the upper end portion of the upper arm shell 4 to firmly connect the upper arm shell 4 to the upper arm skeleton.

The first buckle structure may be structured in any appropriate manner. Optionally, the first buckle structure may include a first locking plate and a first clamping slot, which are matched with each other. The first locking plate is formed at one of the first shoulder joint cover fixing portion 74 and the second shoulder joint cover fixing portion 75. The first clamping slot is formed in the other of the first shoulder joint cover fixing portion 74 and the second shoulder joint cover fixing portion 75. The first locking plate is inserted into the first clamping slot such that the first shoulder joint cover fixing portion 74 and the second shoulder joint cover fixing portion 75 are clamped with each other to tightly press the upper arm shell 4 on the upper arm skeleton.

In addition, in order to reduce the risk that the upper arm shell 4 falls off the upper arm skeleton, a first threaded mounting hole may be formed in one of the first shoulder joint cover fixing portion 74 and the second shoulder joint cover fixing portion 75. A fastener (e.g., a bolt and a screw) penetrates through the other of the first shoulder joint cover fixing portion 74 and the second shoulder joint cover fixing portion 75 to be fixedly connected to the first threaded mounting hole to provide a locking force for the upper arm shell 4. Therefore, the risk that the upper arm shell 4 falls off the upper arm skeleton is reduced, and the reliable connection between the upper arm shell 4 and the upper arm skeleton is ensured.

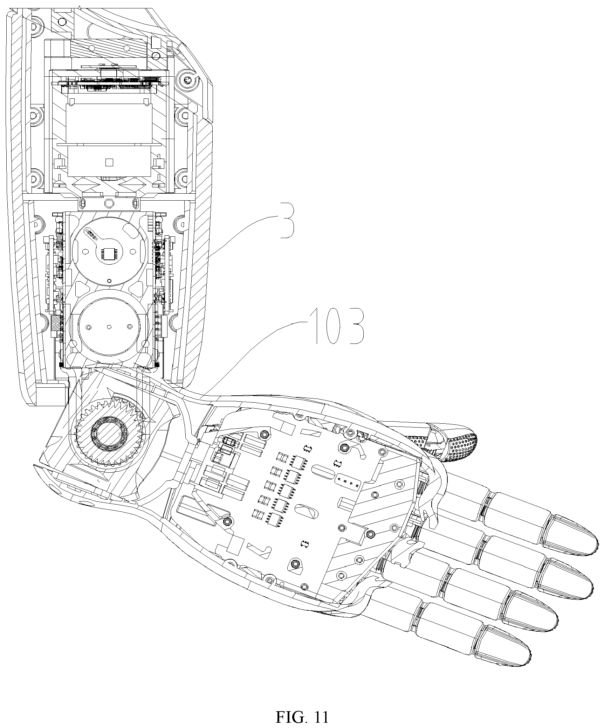

In the specific implementation mode provided in the present disclosure, the forearm shell 3 may be a flexible shell. In the embodiment, the housing includes a wrist joint shell made of a plastic material. The wrist joint shell is located on a lower side of the forearm shell 3, and includes a wrist joint cover portion configured to cover a wrist joint actuator. A palm 103 of a robot is connected with the wrist joint actuator. The forearm shell 3 is a flexible shell. An upper end portion of the forearm shell 3 is fixed to an upper end portion of a forearm skeleton of the robot. A lower end portion of the forearm shell 3 is freely suspended and extends to a wrist joint. When the wrist joint actuator drives the palm 103 of the robot to move to the lower end portion of the forearm shell 3 with interferences, the lower end portion of the forearm shell 3 is stressed to be elastically deformed, as shown in FIG. 11. In such case, the palm 103 of the robot may be driven by the wrist joint actuator to keep moving, and the lower end portion of the forearm shell 3 may not be damaged or abraded by the interferences of the palm 103 of the robot, so that the forearm shell 3 may reduce and even avoid limitations to a motion range of the wrist joint of the robot. Therefore, the forearm needs not to be arranged away from the wrist joint of the robot, and the lower end portion of the forearm shell 3 may cover the wrist joint of the robot to solve the problem of lack of aesthetics caused by the exposure of components and cables at the wrist joint of the robot and further protect the components and cables at the wrist joint of the robot.

The forearm shell 3 may be structured in any appropriate manner. Optionally, the forearm shell 3 is structured into a sleeve-shaped structure capable of sleeving the forearm skeleton of the robot. The upper end portion of the forearm shell 3 may be connected to the upper end portion of the forearm skeleton in a tensioned state through a second positioning and connecting structure. Through the second positioning and connecting structure, a mounting position of the forearm shell 3 may be found rapidly and accurately, and the accuracy of the mounting position of the forearm shell 3 is ensured. Moreover, the upper end portion of the forearm shell 3 is connected to the upper end portion of the forearm skeleton, and the lower end portion of the forearm shell 3 extends to the wrist joint. Such a setting ensures that the forearm shell 3 may completely cover the forearm skeleton, thereby ensuring the attractive appearance of the robot.

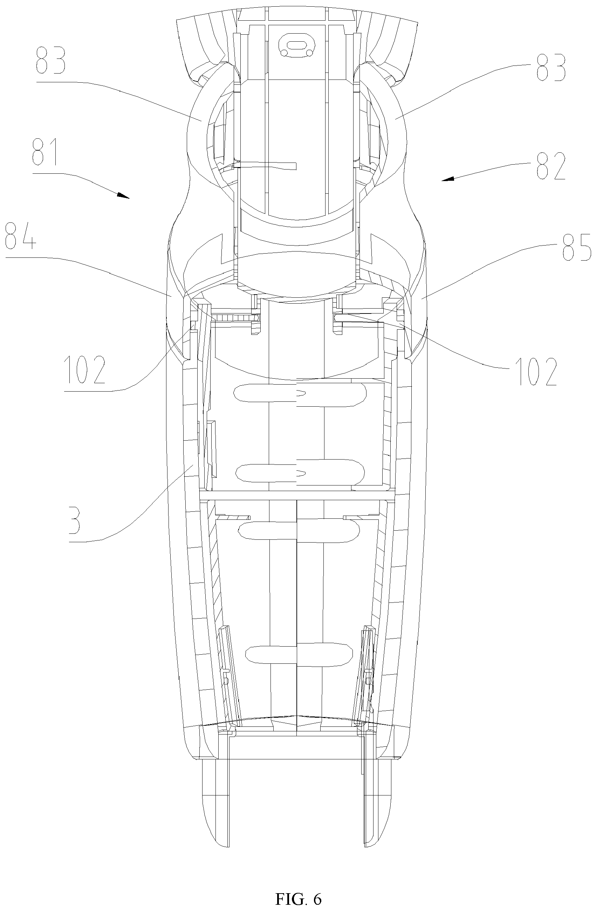

The second positioning and connecting structure may be structured in any appropriate manner. Optionally, as shown in FIGs. 3 and 6, the second positioning and connecting structure may include a second columnar bump 102 formed at the upper end portion of the forearm skeleton and a second through hole 31 formed in the upper end portion of the forearm shell 3. The second columnar bump 102 may be matched with the second through hole 31. The second columnar bump 102 is matched with the second through hole 31, so that the mounting position of the forearm shell 3 is accurate, and the forearm shell 3 and the forearm skeleton may be assembled conveniently.

In order to ensure the connecting reliability between the forearm shell 3 and the forearm skeleton, a fastening connecting piece may be arranged at the upper end portion of the forearm shell 3. The forearm shell 3 is firmly mounted to the forearm skeleton through the fastening connecting piece. The fastening connecting piece may be a bolt, a screw, etc. Multiple bots or screws may be circumferentially spaced around the upper end portion of the forearm shell 3 to fasten the forearm shell 3 to the forearm skeleton. In the specific embodiment provided in the present disclosure, the forearm shell 3 may be fastened to the upper arm skeleton through an elbow joint shell made of a plastic material (e.g., plastics and other plastic materials). The elbow joint shell includes a third shell 81 and a fourth shell 82. Each of the third shell 81 and the fourth shell 82 includes an elbow joint cover portion 83 configured to cover an elbow joint actuator and an elbow joint cover fixing portion connected with the elbow joint cover portion 83. The elbow joint cover fixing portion covers the upper end portion of the forearm shell 3 in a surrounding and pressing manner. The upper end portion of the forearm shell 3 is tightly pressed on the forearm skeleton through the elbow joint cover fixing portion to avoid the forearm shell 3 being separated from the forearm skeleton, thereby ensuring the connecting reliability of the forearm shell 3 and the forearm skeleton.

The elbow joint cover fixing portion may be structured in any appropriate manner. Optionally, referring to FIGs. 2 and 3, the elbow joint cover fixing portion includes a first elbow joint cover fixing portion 84 and a second elbow joint cover fixing portion 85, both of which are structured into half rings. The first elbow joint cover fixing portion 84 is formed on the third shell 81. The second elbow joint cover is formed on the fourth shell 82. The first elbow joint cover fixing portion 84 and the second elbow joint cover fixing portion 85 are butted into a ring structure through a buckle structure. The first elbow joint cover fixing portion 84 and the second elbow joint cover fixing portion 85 circumferentially surround the upper end portion of the forearm shell 3 to firmly connect the forearm shell 3 to the forearm skeleton.

The second buckle structure may be structured in any appropriate manner. Optionally, the second buckle structure may include a second locking plate and a second clamping slot, which are matched with each other. The second locking plate is formed at one of the first elbow joint cover fixing portion 84 and the second elbow joint cover fixing portion 85. The second clamping slot is formed in the other of the first elbow joint cover fixing portion 84 and the second elbow joint cover fixing portion 85. The second locking plate is inserted into the second clamping slot such that the first elbow joint cover fixing portion 84 and the second elbow joint cover fixing portion 85 are clamped with each other to tightly press the forearm shell 3 on the forearm skeleton. In addition, in order to reduce the risk that the forearm shell 3 falls off the forearm skeleton, a second threaded mounting hole may be formed in one of the first elbow joint cover fixing portion 84 and the second elbow joint cover fixing portion 85. A fastener (e.g., a bolt and a screw) penetrates through the other of the first elbow joint cover fixing portion 84 and the second elbow joint cover fixing portion 85 to be fixedly connected to the second threaded mounting hole to provide a locking force for the forearm shell 3. Therefore, the risk that the forearm shell 3 falls off the forearm skeleton is reduced, and the reliable connection between the forearm shell 3 and the forearm skeleton is ensured.

In the specific implementation mode provided in the present disclosure, the chest shell may be a flexible shell. In the embodiment, the housing includes a cuirass shell made of a plastic material. The chest shell is a flexible shell, and includes a waist portion 91 located at a lower end portion thereof, a chest side portion 92 located on a side of a chest of a robot and a shoulder portion 93 extending from the chest side portion 92 to a shoulder. A shoulder opening 94 through which a shoulder joint mechanism penetrates is formed in the shoulder portion 93. The cuirass shell covers a forebreast and back of the robot. An inner edge of the chest shell close to the cuirass shell is fixed to a chest skeleton of the robot. As shown in FIGs. 1, 2 and 7, the chest skeleton of the robot is completely covered by the cuirass shell and the chest shell. Therefore, the problem of lack of aesthetics caused by the exposure of components and cables at the chest of the robot is solved, and the components and cables at the chest of the robot are further protected. It is to be explained here that direction term "inner" in "inner edge" is defined relative to the position of the cuirass shell. The direction close to the cuirass shell is "inner", and the opposite direction is "outer".

A side, where the shoulder opening 94 is formed, of the shoulder portion 93 is freely suspended and extends to a shoulder joint to cover the shoulder joint of the robot. Therefore, the problem of lack of aesthetics caused by the exposure of components and cables at the shoulder joint of the robot is solved, and the components and cables at the shoulder joint of the robot are further protected.

A lower end portion of the waist portion 91 away from the cuirass shell is freely suspended and extends to a waist joint to cover the waist joint of the robot. Therefore, the problem of lack of aesthetics caused by the exposure of components and cables at the waist joint of the robot is solved, and the components and cables at the waist joint of the robot are further protected. When a waist actuator of the robot drives a waist of the robot to move to the lower end portion of the waist portion 91 and interfere with a waist actuator shell, the lower end portion of the waist portion 91 is stressed to be elastically deformed. In such case, the waist of the robot may be driven by the waist joint to keep moving, and the lower end portion of the waist portion 91 may not be damaged or abraded by interferences of the waist joint actuator shell, so that the waist portion 91 may reduce and even avoid limitations to a motion range of the waist joint of the robot. Therefore, the waist portion 91 of the chest shell needs not to be arranged away from the waist joint of the robot, and the waist portion 91 of the chest shell may cover the waist joint of the robot to solve the problem of lack of aesthetics caused by the exposure of the components and cables at the waist joint of the robot and further protect the components and cables at the waist joint of the robot.

In order to firmly mount the chest shell to the chest skeleton of the robot, the chest shell may be mounted to the chest skeleton of the robot in any appropriate manner. In an embodiment, the inner edge of the chest shell may be covered by an outer edge of the cuirass shell. The chest shell and the cuirass shell are fixed to the chest skeleton through fasteners to provide a locking force for the chest shell. Therefore, the chest shell is firmly mounted to the chest skeleton of the robot. In another embodiment, an inner edge of each of the waist portion 91, the chest side portion 92 and the shoulder portion 93 is fixed to the chest skeleton of the robot. For example, they may be fixed to the chest skeleton of the robot through fasteners. In such case, the cuirass shell covers the inner edge of each of the waist portion 91, the chest side portion 92 and the shoulder portion 93. Therefore, attractive appearance is ensured. It is to be explained here that direction term "inner" in "inner edge" is defined relative to the position of the cuirass shell. The direction close to the cuirass shell is "inner", and the opposite direction is "outer".

In the specific implementation mode provided in the present disclosure, as shown in FIGs. 2, 7 and 9, the cuirass shell includes a forebreast cuirass shell 5 and a back cuirass shell 6. An upper end portion of the forebreast cuirass shell 5 is clamped with an upper end portion of the back cuirass shell 6. The forebreast cuirass shell 5 and the back cuirass shell 6 define together a neck opening 10 through which a neck joint mechanism penetrates. The forebreast cuirass shell 5 and the back cuirass shell 6 cover the inner edge of each of the waist portion 91, the chest side portion 92 and the shoulder portion 93. The waist portion 91, the chest side portion 92 and the shoulder portion 93 are tightly pressed, and meanwhile, the waist portion 91, the chest side portion 92 and the shoulder portion 93 are fastened to the chest skeleton of the robot through fasteners.

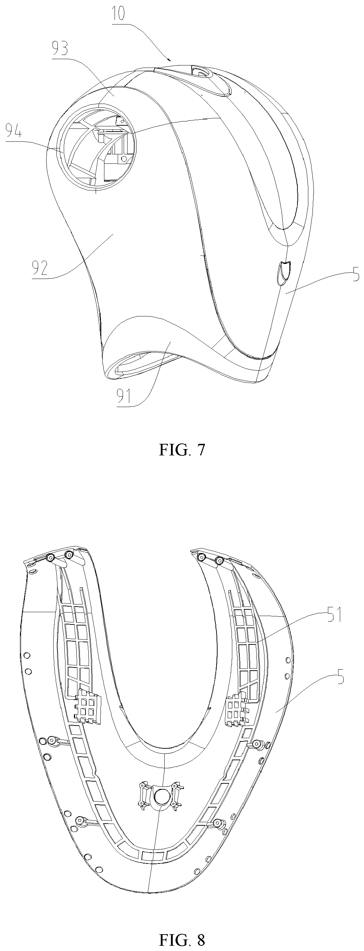

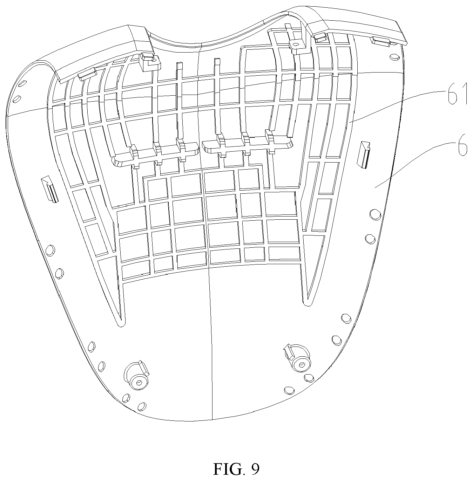

Referring to FIG. 8, a meshed front stiffener 51 may be arranged on an inner lateral surface of the forebreast cuirass shell 5 to improve the structural strength of the forebreast cuirass shell 5. In addition, referring to FIG. 9, a meshed rear stiffener 61 may also be arranged on an inner lateral surface of the upper end portion of the back cuirass shell 6 to improve the structural strength of the back cuirass shell 6.

Based on the above-mentioned technical solutions, the present disclosure also provides a robot. The robot includes the above-mentioned robot housing, and thus also has the above-mentioned features. Elaborations are omitted herein to avoid repetitions.

The above describes the preferred implementation mode of the present disclosure in detail in combination with the drawings. However, the present disclosure is not limited to specific details in the above-mentioned implementation mode. Various simple transformations may be made to the technical solutions of the present disclosure within the scope of the technical concept of the present disclosure. All these simple transformations fall within the scope of protection of the present disclosure.

In addition, it is to be noted that each specific technical feature described in the above-mentioned specific implementation mode may be combined as appropriate without conflicts. In order to avoid unnecessary repetitions, various possible combination manners will not be further described in the present disclosure. Moreover, various implementation modes of the present disclosure may also be freely combined, and any combinations within the idea of the present disclosure shall be regarded as contents disclosed in the present disclosure.

## Claims

1. A robot housing, comprising a forearm shell (3), an upper arm shell (4) and a chest shell, wherein at least one of the forearm shell (3), the upper arm shell (4) and the chest shell is a flexible shell; and the flexible shell comprises an elastic main body layer (1).

2. The robot housing of claim 1, wherein the flexible shell comprises an elastic fabric layer (2); and the elastic fabric layer (2) wraps a whole outer surface of the main body layer (1).

3. The robot housing of claim 2, wherein the elastic fabric layer (2) is hydrophobic, and/or oleophobic, and/or fireproof and/or abrasion-proof.

4. The robot housing of claim 1, wherein the main body layer (1) is made of a foam material.

5. The robot housing of claim 4, wherein the foam material is ethyl vinyl acetate foam; and hardness of the ethyl vinyl acetate foam is 50 HB to 70 HB.

6. The robot housing of any one of claims 1 to 5, comprising an elbow joint shell made of a plastic material, wherein the elbow joint shell is located between the forearm shell (3) and the upper arm shell (4), and comprises an elbow joint cover portion (83) configured to cover an elbow joint actuator and an elbow joint cover fixing portion connected with the elbow joint cover portion (83); the elbow joint cover fixing portion is connected to the forearm shell (3); the upper arm shell (4) is a flexible shell; an upper end portion of the upper arm shell (4) is fixed to an upper end portion of an upper arm skeleton of a robot; and a lower end portion of the upper arm shell (4) is freely suspended and extends to an elbow joint.

7. The robot housing of claim 6, wherein the upper arm shell (4) is structured into a sleeve-shaped structure capable of sleeving the upper arm skeleton of the robot; the upper end portion of the upper arm shell (4) is able to be connected to the upper end portion of the upper arm skeleton in a tensioned state through a first positioning and connecting structure;
the housing comprises a shoulder joint shell made of a plastic material; the shoulder joint shell comprises a shoulder joint cover portion (73) configured to cover a shoulder joint actuator and a shoulder joint cover fixing portion connected with the shoulder joint cover portion (73); and the shoulder joint cover fixing portion covers the upper end portion of the upper arm shell (4) in a surrounding and pressing manner.

8. The robot housing of claim 7, wherein the first positioning and connecting structure comprises a first columnar bump (101) formed at the upper end portion of the upper arm skeleton and a first through hole (41) formed in the upper end portion of the upper arm shell (4); and the first columnar bump (101) is able to be matched with the first through hole (41).

9. The robot housing of claim 7, wherein the shoulder joint cover fixing portion comprises a first shoulder joint cover fixing portion (74) and a second shoulder joint cover fixing portion (75), the first shoulder joint cover fixing portion (74) and the second shoulder joint cover fixing portion (75) are structured into half rings; and the first shoulder joint cover fixing portion (74) and the second shoulder joint cover fixing portion (75) are butted into a ring structure through a first buckle structure.

10. The robot housing of any one of claims 1 to 5, comprising a wrist joint shell made of a plastic material, wherein the wrist joint shell is located on a lower side of the forearm shell (3), and comprises a wrist joint cover portion configured to cover a wrist joint actuator; a palm (103) of a robot is connected with the wrist joint actuator; the forearm shell (3) is a flexible shell; an upper end portion of the forearm shell (3) is fixed to an upper end portion of a forearm skeleton of the robot; and a lower end portion of the forearm shell (3) is freely suspended and extends to a wrist joint.

11. The robot housing of claim 10, wherein the forearm shell (3) is structured into a sleeve-shaped structure capable of sleeving the forearm skeleton of the robot; the upper end portion of the forearm shell (3) is able to be connected to the upper end portion of the forearm skeleton in a tensioned state through a second positioning and connecting structure;
the housing comprises elbow joint shell made of a plastic material; the elbow joint shell comprises an elbow joint cover portion (83) configured to cover an elbow joint actuator and an elbow joint cover fixing portion connected with the elbow joint cover portion (83); and the elbow joint cover fixing portion covers the upper end portion of the forearm shell (3) in a surrounding and pressing manner.

12. The robot housing of claim 11, wherein the second positioning and connecting structure comprises a second columnar bump (102) formed at the upper end portion of the forearm skeleton and a second through hole (31) formed in the upper end portion of the forearm shell (3); and the second columnar bump (102) is able to be matched with the second through hole (31).

13. The robot housing of claim 11, wherein the elbow joint cover fixing portion comprises a first elbow joint cover fixing portion (84) and second elbow joint cover fixing portion (85), the first elbow joint cover fixing portion (84) and the second elbow joint cover fixing portion (85) are structured into half rings; and the first elbow joint cover fixing portion (84) and the second elbow joint cover fixing portion (85) are butted into a ring structure through a second buckle structure.

14. The robot housing of any one of claims 1 to 5, comprising a cuirass shell made of a plastic material, wherein the chest shell is a flexible shell, and comprises a waist portion (91) located at a lower end portion thereof, a chest side portion (92) located on a side of a chest of a robot and a shoulder portion (93) extending from the chest side portion (92) to a shoulder; a shoulder opening (94) through which a shoulder joint mechanism penetrates is formed in the shoulder portion (93); the cuirass shell covers a forebreast and back of the robot; an inner edge of the chest shell close to the cuirass shell is fixed to a chest skeleton of the robot;
a side, where the shoulder opening (94) is formed, of the shoulder portion (93) is freely suspended and extends to a shoulder joint; and/or, a lower end portion of the waist portion (91) away from the cuirass shell is freely suspended and extends to a waist joint.

15. The robot housing of claim 14, wherein the inner edge of the chest shell is covered by an outer edge of the cuirass shell; and the chest shell and the cuirass shell are fixed to the chest skeleton through a fastener.

16. The robot housing of claim 14, wherein an inner edge of each of the waist portion (91), the chest side portion (92) and the shoulder portion (93) is fixed to the chest skeleton of the robot.

17. The robot housing of claim 14, wherein the cuirass shell comprises a forebreast cuirass shell (5) and a back cuirass shell (6); an upper end portion of the forebreast cuirass shell (5) is clamped with an upper end portion of the back cuirass shell (6); the forebreast cuirass shell (5) and the back cuirass shell (6) define together a neck opening (10) through which a neck joint mechanism penetrates;
a meshed front stiffener (51) is arranged on an inner lateral surface of the forebreast cuirass shell (5); and/or,
a meshed rear stiffener (61) is arranged on an inner lateral surface of the upper end portion of the back cuirass shell (6).

18. A robot, comprising the robot housing of any one of claims 1 to 17.
